# EUROPEAN PATENT APPLICATION

(11) **EP 2 860 936 A1**
(43) Date of publication of application: **15.04.2015**
(21) Application number: 13816079.1
(22) Date of filing: 04.06.2013
(51) Int. Cl.: H04L 29/06

(54) **TCP DATA TRANSMISSION METHOD, TCP UNINSTALLATION ENGINE, AND SYSTEM**

(30) Priority: 10.07.2012 CN 201210237465
(71) Applicant: Huawei Technologies Co., Ltd., Longgang District Shenzhen, Guangdong 518129 (CN)
(72) Inventor: LUO, Hai, Shenzhen Guangdong 518129 (CN); HU, Xinyu, Shenzhen Guangdong 518129 (CN); WEI, Qikun, Shenzhen Guangdong 518129 (CN); ZHANG, Liang, Shenzhen Guangdong 518129 (CN)
(74) Representative: Körber, Martin Hans
(86) International application number: PCT/CN2013/076686
(87) International publication number: WO 2014/008793

(57) **Abstract**

Embodiments of the present invention provide a transmission control protocol TCP data transmission method, a TCP offload engine, and a system, which relate to the field of communications, and can reduce data migration between the TCP offload engine and a CPU, and at the same time reduce parsing work on data by the CPU, so as to achieve the effects of reducing resources of the CPU for processing TCP/IP data and reducing transmission delay. The method includes: a TCP offload engine receives TCP data sent by a remote device; performs TCP offloading on the TCP data; identifies the TCP offloaded data, and sends, according to an identification result, the TCP offloaded data to a CPU or a storage device corresponding to storage position information issued by the CPU. The embodiments of the present invention are applicable to TCP data transmission.

## Description

### TECHNICAL FIELD

The present invention relates to the field of communications, and more particularly, to a transmission control protocol TCP data transmission method, a TCP offload engine and a system.

### BACKGROUND

Transmission control protocol/Internet protocol (Transmission Control Protocol/ Internet Protocol, TCP/IP) is the most basic communication protocol of the Internet. However, traditional TCP/IP technology needs to occupy a large amount of central processing unit (Central Processing Unit, CPU) resources when network data transmission is processed. This is because TCP data will most often be processed by software, that is, by TCP/IP protocol stack running on a processor, and software processing manners mainly includes three aspects, i.e., protocol processing, interrupt processing and data replication, which incurs considerable system overhead.

In recent years, increasing of video traffic takes up a major part of increasing of network traffic, besides, network storage has been more and more widely applied. Requirements on a bandwidth and a response time of such two types of network applications become higher and higher. However, since the two types of network applications often adopt TCP transmission, processing of TCP data becomes a main bottleneck. The two types of network applications also have a feature that the CPU does not need to process all the transmitted data, such as TCP data of file content, video coding format and video content, however, in a traditional manner, all the TCP data needs to be processed by the CPU, increasing overhead of storage and replication, and meanwhile increasing extra burden on the CPU due to processing the transmitted data.

In order to meet rapid growth of network traffic and network communication speed, a technology of transferring the processing of TCP data on a hardware has emerged, namely TCP offload engine (TCP offload engine, TOE) technology.

The TOE technology aims at reducing consumption of TCP/IP processing of the CPU, and therefore, cumbersome work during TCP/IP processing will be processed by the TOE, such as, TCP response and state management of TCP link establishment and disconnection, and TCP response and state management of disorder re-arrangement. The existing TOE design adopts null replication socket technology, during the process of receiving, data received by TOE is directly transferred from TOE buffer to user buffer space via DMA (Direct Memory Access, direct memory access); during the process of sending, data to be sent is directly transferred from user buffer space to TOE buffer via DMA, and the TOE is responsible for packaging data into TCP message for sending. The null replication socket technology avoids data migration between the user buffer space and the protocol stack, and reduces occupation of CPU. However, when sending and receiving data, the TOE will also transmit all the data with the user buffer space via TOE memory, and will still occupy significant CPU overhead and have large possible transmission delay. In terms of the received data, the CPU needs to extract the data which must be processed by the CPU only after parsing all the data, and then delivers to an application program or protocol stack for processing, which increases processing overhead of the CPU.

### SUMMARY

Embodiments of the present invention provide a transmission control protocol TCP data transmission method, a TCP offload engine, and a system, which can reduce data migration between the TCP offload engine and a CPU, and at the same time reduce parsing work on data by the CPU, so as to achieve the effects of reducing resources of the CPU for processing TCP/IP data and reducing transmission delay.

To achieve the above object, embodiments of the present invention provide technical solutions as follows:
In a first aspect, there is provided a transmission control protocol TCP data transmission method, including:
   receiving, by a TCP offload engine, transmission control protocol TCP data sent by a remote device;
   performing TCP offloading on the TCP data;
   identifying the TCP offloaded data, and sending, according to an identification result, the TCP offloaded data to a CPU or a storage device corresponding to storage position information issued by the CPU.

In a possible implementation of the first aspect, the identifying the TCP offloaded data, and sending, according to the identification result, the TCP offloaded data to the CPU or the storage device corresponding to storage position information issued by the CPU, includes:
identifying the TCP offloaded data;
sending signaling data or critical data in the TCP offloaded data to the CPU according to the identification result, where the critical data is data to be processed by the CPU other than the signaling data and content data;
sending, according to the identification result, the content data in the TCP offloaded data to the storage device corresponding to the storage position information issued by the CPU.

In a second aspect, there is provided a transmission control protocol TCP data transmission method, including:
acquiring data indicated by a CPU;
performing TCP encapsulation on the data and sending the encapsulated data to a remote device.

In a first possible implementation of the second aspect, the acquiring the data indicated by the CPU includes: receiving storage position information sent by the CPU; reading content data in a storage space specified by the storage position information;
correspondingly, the performing the TCP encapsulation on the data and sending the encapsulated data to the remote device, includes: performing TCP encapsulation on the content data and sending the encapsulated content data to the remote device.

In a second possible implementation of the second aspect, the acquiring the data indicated by the CPU includes: receiving signaling payload data sent by the CPU;
correspondingly, the performing the TCP encapsulation on the data and sending the encapsulated data to the remote device, includes: performing TCP encapsulation on the signaling payload data and sending the encapsulated signaling payload data to the remote device.

In a third aspect, there is provided a transmission control protocol TCP offload engine, including a state managing unit, a parsing unit and a sending unit; where:
the state managing unit is configured to receive TCP data of a remote device, and perform TCP offloading on the TCP data;
the parsing unit is configured to identify the TCP offloaded data, and send, according to an identification result, the TCP offloaded data to a storage device corresponding to storage position information issued by a CPU, or to the CPU via the state managing unit;
the state managing unit is further configured to acquire data indicated by the CPU and perform TCP encapsulation on the data;
the sending unit is configured to receive the TCP encapsulated data encapsulated by the state managing unit and send the TCP encapsulated data to the remote device.

In a first possible implementation of the third aspect, the parsing unit is specifically configured to identify the TCP offloaded data, and send, according to the identification result, content data in the TCP offloaded data to the storage device corresponding to the storage position information issued by the CPU or send, according to the identification result, signaling data or critical data in the TCP offloaded data to the CPU via the state managing unit, where the critical data is the data to be processed by the CPU other than the signaling data and the content data.

In a second possible implementation of the third aspect according to the third aspect or the first possible implementation of the third aspect, the state managing unit is specifically configured to receive the storage position information sent by the CPU, and send the storage position information to the sending unit; receive content data sent by the sending unit, perform TCP encapsulation on the content data and send the TCP encapsulated content data to the remote device via the sending unit; the sending unit is specifically configured to receive the storage position information sent by the state managing unit, read content data in a storage space specified by the storage position information and send the content data to the state managing unit.

In a third possible implementation of the third aspect according to any of the possible implementations of the third aspect, the state managing unit is specifically configured to receive signaling payload data sent by the CPU and perform TCP encapsulation on the signaling payload data;
the sending unit is specifically configured to receive the TCP encapsulated signaling payload data sent by the state managing unit and send the TCP encapsulated signaling payload data to the remote device.

In a fourth aspect, there is provided a data transmission system, including a local device and a remote device,
the local device includes a CPU connected through a data bus, the transmission control protocol TCP offload engine according to any of the above, and a storage device.

In the transmission control protocol TCP data transmission method, the TCP offload engine, and the system according to the embodiments of the present invention, the TCP offload engine can respectively process different types of data, which reduces data migration between the TCP offload engine and the CPU, and at the same time reduces parsing work on data by the CPU, so as to achieve the effects of reducing resources for processing TCP data occupied by the CPU and reducing transmission delay.

### BRIEF DESCRIPTION OF DRAWINGS

In order to illustrate the technical solutions in embodiments of the present invention or the prior art more clearly, accompanying drawings needed in the embodiments or the prior art are illustrated briefly as follows. Apparently, the accompanying drawings are merely certain of embodiments of the invention, and persons skilled in the art can derive other drawings from them without creative efforts.
FIG. 1 is a schematic flow chart of a transmission control protocol TCP data transmission method according to an embodiment of the present invention;
FIG. 2 is a schematic flow chart of another transmission control protocol TCP data transmission method according to an embodiment of the present invention;
FIG. 3 is a schematic flow chart of still another transmission control protocol TCP data transmission method according to an embodiment of the present invention;
FIG. 4 is a schematic flow chart of yet another transmission control protocol TCP data transmission method according to an embodiment of the present invention;
FIG. 5 is a schematic structural diagram of a transmission control protocol TCP offload engine according to an embodiment of the present invention;
FIG. 6 is a schematic structural diagram of a data transmission system according to an embodiment of the present invention;
FIG. 7 is a schematic structural diagram of another data transmission system according to an embodiment of the present invention;
FIG. 8 is a schematic flow chart illustrating an application of a transmission control protocol TCP data transmission method according to an embodiment of the present invention; and
FIG. 9 is a schematic flow chart illustrating an application of another transmission control protocol TCP data transmission method according to an embodiment of the present invention.

### DESCRIPTION OF EMBODIMENTS

The technical solutions in embodiments of the present invention are hereinafter described clearly and comprehensively with reference to the accompanying drawings in the embodiments of the present invention. Obviously, the embodiments described here are part of the embodiments of the invention and not all of the embodiments. All other embodiments, which can be derived by persons skilled in the art from the embodiments given herein without creative efforts, shall fall within the protection scope of the present invention.

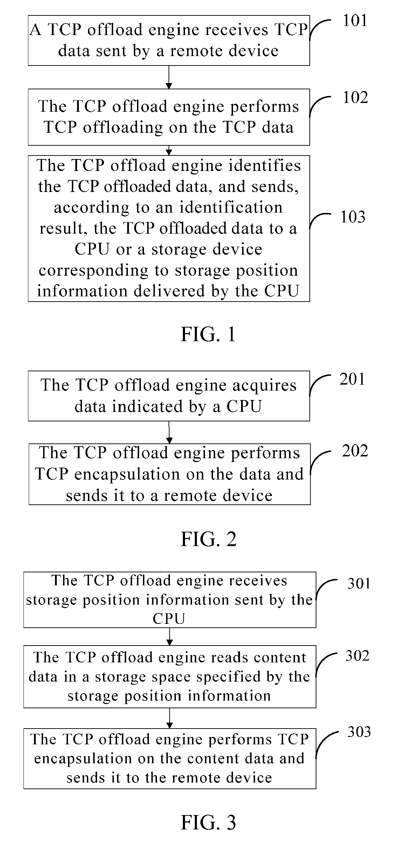

An embodiment of the present invention provides a transmission control protocol TCP data transmission method, as shown in FIG. 1, the method includes:
101, A TCP offload engine receives TCP data sent by a remote device.
   Of course, the remote device includes: a server, a terminal device and etc.
102, The TCP offload engine performs TCP offloading on the TCP data.
   The TCP offloading is protocol processing during the data transmission, including calculation check, retransmission for maintaining reliable TCP transmission, disorder message re-arrangement and etc.
103, The TCP offload engine identifies the TCP offloaded data, and sends, according to an identification result, the TCP offloaded data to a CPU or a storage device corresponding to storage position information issued by the CPU.

Illustratively, the data offloaded by the TCP offload engine can be classified into signaling data, critical data and content data, where the critical data is the data to be processed by the CPU other than the signaling data and the content data, here, it can be the data which must be acquired and processed by a service software on the TCP offload engine for data transmission, such as flash video (flash video, flv) metadata, and the flash refers to the standard for interactive vector graphics and network animations proposed by macromedia (macromedia) companies.

Further, optionally, step 103 includes: the TCP offload engine identifies the TCP offloaded data, sends the signaling data or the critical data in the TCP offloaded data to the CPU according to the identification result, where the critical data is the data to be processed by the CPU other than the signaling data and the content data; and sends content data in the TCP offloaded data to the storage device corresponding to storage position information issued by the CPU.

In the transmission control protocol TCP data transmission method according to embodiments of the present invention, the TCP offload engine can directly perform TCP offload classification on the received message data, and deliver the signaling data and critical data in the classified data, which need to be processed by the CPU, to the CPU for processing, thereby reducing data migration between the TCP offload engine and the CPU, and at the same time reducing parsing work on data by the CPU, and reducing steps and frequency for processing data by the CPU, so as to achieve the effects of reducing resources for processing TCP/IP data occupied by the CPU and reducing transmission delay.

An embodiment of the present invention provides another transmission control protocol TCP data transmission method, as shown in FIG. 2, the method includes:
201, A TCP offload engine acquires data indicated by a CPU.
202, The TCP offload engine performs TCP encapsulation on the data and sends it to a remote device.

Likewise, the remote device includes: a server, a terminal device and etc.

In the transmission control protocol TCP data transmission method according to embodiments of the present invention, the TCP offload engine can process the data according to an instruction sent by the CPU, which reduces steps for processing the data by the CPU, so as to achieve the effects of reducing resources for processing TCP/IP data occupied by the CPU and reducing transmission delay.

The data indicated by the CPU in 201 can be content data, or signaling payload data.

On the basis of the transmission control protocol TCP data transmission method shown in FIG. 2, optionally, with reference to FIG. 3, the method specifically includes:
301, The TCP offload engine receives storage position information sent by the CPU.
302, The TCP offload engine reads content data in a storage space specified by the storage position information.
303, The TCP offload engine performs TCP encapsulation on the content data and sends it to the remote device.

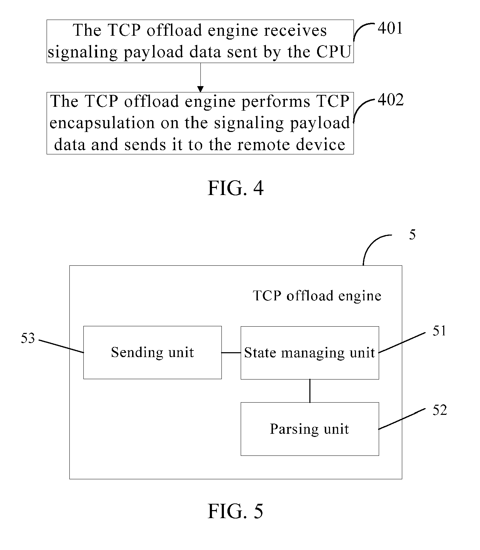

On the basis of the transmission control protocol TCP data transmission method shown in FIG. 2, optionally, with reference to FIG. 4, the method specifically includes:
401, The TCP offload engine receives signaling payload data sent by the CPU.
402, The TCP offload engine performs TCP encapsulation on the signaling payload data and sends it to the remote device.

The TCP offload engine processes differently on different types of data sent by the CPU and sends them, thereby reducing data migration between the TCP offload engine and the CPU, and at the same time reducing parsing work on data by the CPU, so as to achieve the effects of reducing resources for processing TCP/IP data occupied by the CPU and reducing transmission delay.

An embodiment of the present invention provides a transmission control protocol TCP offload engine, as shown in FIG. 5, including a state managing unit 51, a parsing unit 52 and a sending unit 53; where:
the state managing unit 51 is configured to receive TCP data of a remote device, and perform TCP offloading on the TCP data;
the parsing unit 52 is configured to identify the TCP offloaded data, and send, according to an identification result, the TCP offloaded data to a storage device corresponding to storage position information issued by the CPU, or to the CPU via the state managing unit 51;
the state managing unit 51 is further configured to acquire data indicated by the CPU and perform TCP encapsulation on the data;
the sending unit 53 is configured to receive the TCP encapsulated data and send it to the remote device.

Optionally, the parsing unit 52 is specifically configured to identify the TCP offloaded data, and send, according to the identification result, content data in the TCP offloaded data to the storage device corresponding to storage position information issued by the CPU or send, according to the identification result, signaling data or critical data in the TCP offloaded data to the CPU via the state managing unit 51, where the critical data is the data to be processed by the CPU other than the signaling data and the content data.

The critical data can be the data which must be acquired and processed by a service software on the TCP offload engine for data transmission, such as flv metadata.

The TCP offload engine identifies the TCP offloaded data, and delivers the signaling data and critical data, which need to be processed by the CPU, to the CPU for processing, thus reducing data migration between the TCP offload engine and the CPU, and at the same time reducing parsing work on data by the CPU, so as to achieve the effects of reducing resources for processing TCP/IP data occupied by the CPU and reducing transmission delay.

Moreover, optionally, the state managing unit 51 is specifically configured to receive the storage position information sent by the CPU, and send it to the sending unit 53; receive the content data sent by the sending unit 53, perform TCP encapsulation on the content data and send it to the remote device via the sending unit 53; the sending unit 53 is specifically configured to receive the storage position information sent by the state managing unit, read content data in a storage space specified by the storage position information and send the content data to the state managing unit 51.

Here, the TCP offload engine sends the content data in the storage device to the remote device according to position information data issued by the CPU, which avoids migration of the content data between the TCP offload engine and the CPU resulted from the CPU directly processing the content data, and achieves the effects of reducing resources for processing TCP/IP data occupied by the CPU and reducing transmission delay.

Optionally, the state managing unit 51 is further specifically configured to receive signaling payload data sent by the CPU and perform TCP encapsulation on the signaling payload data;

The sending unit 53 is further specifically configured to send the TCP encapsulated content data to the remote device.

The TCP offload engine encapsulates the signaling payload data sent by the CPU, which reduces steps for processing the TCP/IP data by the CPU, so as to achieve the effects of reducing resources of the CPU for processing TCP/IP data and reducing transmission delay.

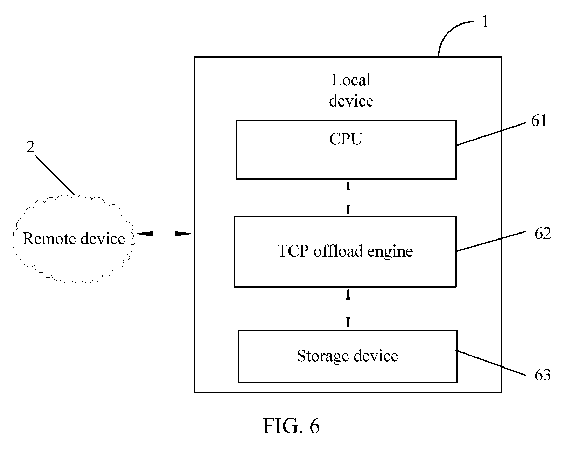

An embodiment of the present invention provides a data transmission system, as shown in FIG. 6, the system includes a local device 1 and a remote device 2 which are connected over a network, the local device 1 includes a CPU 61 connected through a data bus, the TCP offload engine 62 as shown in FIG. 5, and a storage device 63.

The TCP offload engine 62 receives transmission control protocol TCP data sent by the remote device 1; performs TCP offloading on the TCP data; identifies the TCP offloaded data, and sends, according to an identification result, the TCP offloaded data to the CPU 61 or the storage device 63 corresponding to storage position information issued by the CPU 61.

The TCP offload engine 62 is specifically configured to identify the TCP offloaded data, send, according to the identification result, signaling data or critical data in the TCP offloaded data to the CPU 61, where the critical data is the data to be processed by the CPU other than the signaling data and content data; and send content data in the TCP offloaded data to the storage device 63 corresponding to storage position information issued by the CPU 61.

In the data transmission system according to embodiments of the present invention, the TCP offload engine identifies the TCP offloaded data, and delivers the signaling data and critical data, which need to be processed by the CPU, to the CPU for processing, thus reducing data migration between the TCP offload engine and the CPU, and at the same time reducing parsing work on data by the CPU, so as to achieve the effects of reducing resources for processing TCP/IP data occupied by the CPU and reducing transmission delay.

Moreover, the TCP offload engine 62 is further configured to acquire data indicated by the CPU, perform TCP encapsulation on the data and send it to the remote device 2.

The TCP offload engine 62 is specifically configured to receive storage position information sent by the CPU 61; read content data in a storage space specified by the storage position information; perform TCP encapsulation on the content data and send it to the remote device 2.

The TCP offload engine sends the content data in the storage device to the remote device according to position information data issued by the CPU, which avoids migration of the content data between the TCP offload engine and the CPU resulted from the CPU directly processing the content data, and achieves the effects of reducing resources for processing TCP/IP data occupied by the CPU and reducing transmission delay.

The TCP offload engine 62 is specifically configured to receive signaling payload data sent by the CPU 61, perform TCP encapsulation on the signaling payload data and send it to the remote device 2.

The TCP offload engine encapsulates the signaling payload data sent by the CPU, thus reducing steps for processing the TCP/IP data by the CPU, so as to achieve the effects of reducing resources of the CPU for processing TCP/IP data and reducing transmission delay.

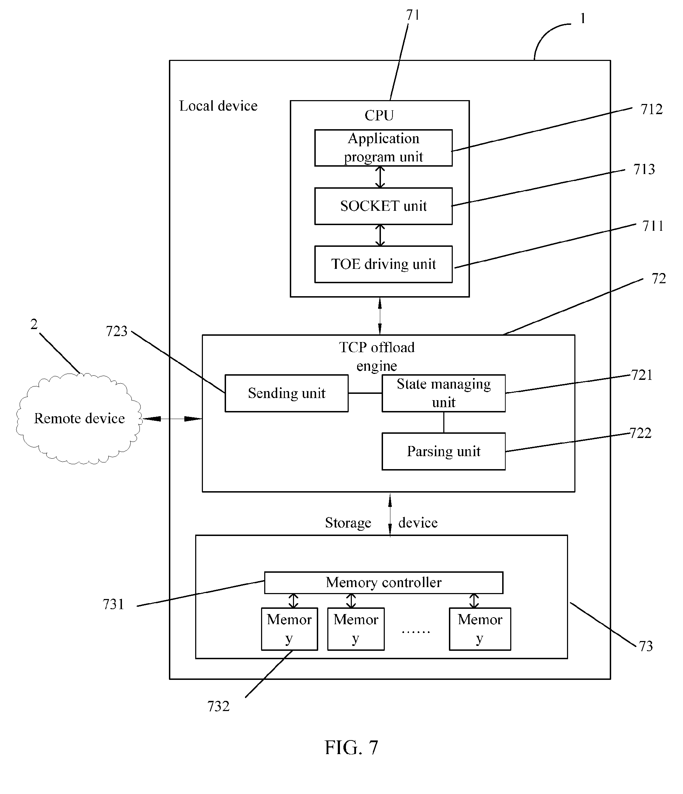

On the basis of the system shown in FIG. 6, an embodiment of the present invention also provides another data transmission system, with reference to FIG. 7, the system includes a local device 1 and a remote device 2 which are connected over a network, the local device 1 includes a CPU 71 connected through a data bus, a TCP offload engine 72, and a storage device 73.

As shown in FIG. 7, the CPU 71 includes: a TOE driving unit 711, an application program unit 712 and a SOCKET unit 713; the TCP offload engine 72 includes a state managing unit 721, a parsing unit 722 and a sending unit 723; the storage device 73 includes a memory controller 731 and a memory 732;

The CPU 71 is connected to the TCP offload engine 72 via the TOE driving unit 711, the TOE driving unit 711 includes a software for operating and controlling the TOE, the CPU 711 establishes the connection with the TOE via the TOE driving unit 711 and sends a control instruction to the TOE, here, the CPU 71 directly performs data interaction with the state managing unit of the TOE via the TOE driving unit 711, the application program unit 712 at the CPU end invokes the TOE driving in a socket manner (which is implemented by the SOCKET unit 713 shown in FIG. 7), and thereby achieving data interaction between the CPU and the TOE, reference for the working method of the TCP offload engine 72 can be made to the embodiment corresponding to FIG. 7, which will not be repeated here.

In the data transmission system according to embodiments of the present invention, the TCP offload engine respectively processes different types of data, which reduces data migration between the TCP offload engine and the CPU, and at the same time reduces parsing work on data by the CPU, so as to achieve the effects of reducing resources for processing TCP/IP data occupied by the CPU and reducing transmission delay.

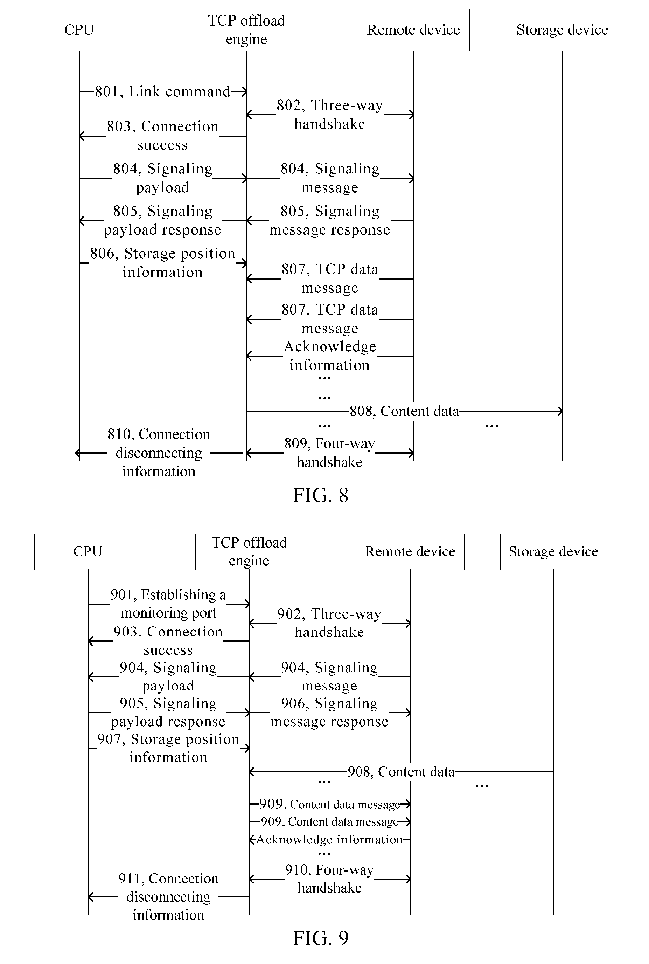

Illustratively, as shown in FIG. 8, by adopting the TCP data transmission method, the TCP offload engine and the system according to embodiments of the present invention, data interaction among the CPU, the TCP offload engine and the remote device during ingress and storing of a hypertext transport protocol (Hypertext Transport Protocol, HTTP) video can adopt the procedures as follows:
801, The CPU issues a command for establishing a TCP link to the TCP offload engine, and the content of the command includes an IP address and a TCP port of the remote device, a local IP address and a local TCP port;
802, The remote device and the TCP offload engine complete a three-way handshake.

The three-way handshake includes:
The first handshake: when establishing a connection, the TCP offload engine sends an SYN (Synchronize Sequence Numbers, synchronous sequence numbers) packet to the remote device, and enters an SYN sending state waiting for an acknowledgment of the remote device, where the SYN packet includes the SYN of the TCP offload engine;

The second handshake: after receiving the SYN packet, the remote device must acknowledge the SYN of the TCP offload engine, and meanwhile the remote device sends an SYN acknowledgment packet including the SYN of the remote device and acknowledgment information, where the acknowledgment information is: SYN of the TCP offload engine+1, and at this time, the remote device enters an SYN reply state; the third handshake: the TCP offload engine receives the SYN acknowledgment packet of the remote device, and sends an acknowledgment packet to the remote device, after the sending of the acknowledgment packet is completed, the TCP offload engine and the remote device enters a connection success state, and the three-way handshake is completed.
803, The TCP offload engine reports a connection success command to the CPU.
804, The CPU issues signaling payload of session layer, presentation layer or application layer, and the TCP offload engine encapsulates the signaling payload into a signaling message and sends it to the remote device.
   Step 804 adopts 401 and 402 in the above embodiment, firstly, the TCP offload engine receives the signaling payload of session layer, presentation layer or application layer sent by the CPU, secondly, the TCP offload engine performs TCP encapsulation on the signaling payload, encapsulates it into a signaling message and sends it to the remote device, where the signaling payload can be an HTTP acquiring signaling of session layer, and the HTTP acquiring signaling is a method for initiating a request for a specific resource in the HTTP protocol.
805, After receiving the signaling message of session layer, presentation layer or application layer sent by the TCP offload engine, the remote device sends a signaling message response to the TCP offload engine; the TCP offload engine offloads the signaling message response to generate a signaling payload response, and sends it to the CPU.
   Here, the method shown in FIG. 1 in the above embodiment is adopted, firstly, the TCP offload engine receives the signaling message response of session layer, presentation layer or application layer (of course, the signaling message response is an HTTP response) sent by the remote device, the TCP offload engine performs TCP offloading on the signaling message response to obtain the signaling payload response; secondly, the TCP offload engine classifies and identifies the offloaded data, here, the identification result only includes the signaling data, i.e., the signaling payload response, and the TCP offload engine sends the signaling payload response to the CPU.
806, After receiving signaling message payload, parsing and processing the signaling message payload, the CPU issues storage position information of the content data to the TCP offload engine.
807, The remote device sends the TCP data message to the TCP offload engine, and the TCP offload engine completes response, performs TCP offload processing, such as disorder re-arrangement on the TCP data message, and classifies and identifies the offloaded data.
   The TCP data message mainly is a content data message, of course, corresponding content data is obtained after the content data message is TCP offloaded, and the content data herein can be media data; meanwhile, the TCP data message also includes a critical data message related to the content data, of course, corresponding critical data is obtained after the critical data message is TCP offloaded, for example, when the media data is of an flv video format, the critical data is flv metadata, and when the media data is of a free lossless audio codec (Free Lossless Audio Codec, FLAC) format, the critical data is FLAC metadata.
808, The TCP offload engine sends the identified content data to a storage space of a storage device specified by the CPU.
   The storage device can be a memory, a hard disk, and etc;
   The processing of step 807 and step 808 can adopt the method shown in FIG. 1 in the above embodiment, here, after the TCP offload engine completes response (the response here generally is to acknowledge information), according to the method in the above embodiment, firstly, the TCP offload engine receives the data message sent by the remote device and performs offloading, secondly, the TCP offload engine classifies and identifies the offloaded data, the identification result includes content data and critical data, and finally the TCP offload engine sends the content data (of course, refer to 807, the content data herein can be media data, namely the shot video data) to the storage device corresponding to the storage position information issued by the CPU in step 806; and sends the critical data to the CPU.
809, After completion of sending the TCP data message by the remote device, the TCP offload engine initiates a four-way handshake with the remote device to disconnect the connection.
   Since the TCP connection is full duplex, the sending of the data flow must be closed in each direction separately when the connection between the remote device and the TCP offload engine is broken. The principle is that, when one side completes its data sending task, it sends ending information to terminate the connection in this direction. When one side receives ending information, it only means that this side cannot receive the data, but still can send data. Therefore, the one side first performing the closure will perform an active closure, and the other side will perform a passive closure. The process of the four-way handshake is as follows:
   The first handshake: the TCP offload engine sends ending information to the remote device to close data transmission from the TCP offload engine to the remote device. The second handshake: the remote device receives the ending information and replies acknowledgment information. The third handshake: the remote device closes the connection with the TCP offload engine, and sends ending information to the TCP offload engine. The fourth handshake: the TCP offload engine replies acknowledgment information to the remote device.
810, The TCP offload engine reports connection disconnecting information to the CPU.

In the above process, the TCP offload engine respectively processes different types of transmitted data, which can reduce data migration between the TCP offload engine and the CPU, and at the same time reduce parsing work on data by the CPU, so as to achieve the effects of reducing resources for processing TCP/IP data occupied by the CPU and reducing transmission delay.

Particularly, during ingress and storing of the HTTP video, the TCP offload engine directly stores content data sent by the remote device according to position information of the content data issued by the CPU, the content data does not need to be processed by the CPU any more, which can reduce data migration between the TCP offload engine and the CPU; moreover, during message interaction with the remote device, the received message is offloaded and identified directly, which reduces parsing work on data by the CPU, so as to achieve the effects of reducing resources for processing TCP/IP data occupied by the CPU and reducing transmission delay.

Illustratively, as shown in FIG. 9, by adopting the TCP data transmission method, the TCP offload engine and the system according to embodiments of the present invention, data interaction among the CPU, the TCP offload engine and the remote device during streaming of a HTTP video can adopt the procedures as follows:
901, The CPU issues a command for establishing a TCP monitoring port to the TCP offload engine, and the content of the command includes a local IP address and a local TCP port;
902, The remote device and the TCP offload engine complete a three-way handshake.
   Reference for the process of the three-way handshake can be made to 802, which will not be repeated here.
903, The TCP offload engine reports a connection success command to the CPU.
904, The remote device sends a signaling message of session layer, presentation layer or application layer, and the TCP offload engine performs TCP offloading, classification and identification to the signaling message, and uploads the identified signaling payload to the CPU;
   The method shown in FIG. 1 in the above embodiment is adopted in this step, firstly, the TCP offload engine receives the signaling message of session layer, presentation layer or application layer sent by the remote device, of course, the signaling message herein can be an HTTP acquiring signaling of session layer, secondly, the TCP offload engine performs TCP offloading on the signaling message to obtain signaling payload, and sends the signaling payload to the CPU, of course, the signaling message herein is an HTTP acquiring message.
905, After receiving the signaling payload sent by the TCP offload engine, the CPU sends a signaling payload response to the TCP offload engine.
906, The TCP offload engine performs TCP encapsulation on the signaling payload response and sends it to the remote device.
   The method shown in FIG. 3 in the above embodiment is adopted in step 905 and step 906, firstly, the TCP offload engine receives the signaling payload response (of course, the signaling payload response herein is an HTTP response) sent by the CPU, performs TCP encapsulation on the signaling payload response to obtain a signaling message response; secondly, the TCP offload engine sends the encapsulated signaling message response to the remote device.
907, The CPU issues position information for reading content data to the TCP offload engine.
908, The TCP offload engine reads, according to the position information issued by the CPU, the content data which is included in the storage device indicated by the position information.
909, The TCP offload engine performs TCP encapsulation on the read content data to obtain a content data message and sends it to the remote device.
   Of course, during streaming of the video, the content data herein mainly is media flow data, and the content data message mainly is media data message.
   The method shown in FIG. 3 in the above embodiment can be adopted during processing of step 907, step 908 and step 909. After receiving the storage position information sent by the CPU, the TCP offload engine firstly reads the content data in the storage device corresponding to the storage position information, and secondly performs TCP encapsulation on the read content data, and sends the encapsulated content data to the remote device.
   Further, the remote device replies an acknowledgment information response after receiving the data packet in a manner of message.
910, The TCP offload engine performs a four-way handshake with the remote device to disconnect the connection after the sending of the data is completed.
   Reference for the procedure of the four-way handshake can be made to step 809, which will not be repeated herein.
911, The TCP offload engine reports connection disconnecting information to the CPU.

In the above process, the TCP offload engine respectively processes different types of transmitted data, which can reduce data migration between the TCP offload engine and the CPU, and at the same time reduce parsing work on data by the CPU, so as to achieve the effects of reducing resources for processing TCP/IP data occupied by the CPU and reducing transmission delay.

Particularly, during ingress and storing of the HTTP video, the TCP offload engine directly performs encapsulation on the content data and sends it according to position information of the content data issued by the CPU, the content data does not need to be processed by the CPU any more, which can reduce data migration between the TCP offload engine and the CPU; moreover, during message interaction with the remote device, the received message is offloaded and identified directly, which reduces parsing work on data by the CPU, so as to achieve the effects of reducing resources for processing TCP/IP data occupied by the CPU and reducing transmission delay.

It should be appreciated by persons skilled in the art that, all or a part of the steps in the above method embodiments may be completed by relevant hardware under the instruction of a program, and the program may be stored in a computer readable storage medium, when the program is executed, the steps in the above method embodiments are performed; the storage medium comprises various media capable of storing program codes, such as a ROM, a RAM), a floppy disk, or an optical disk and the like.

The above descriptions are merely preferred embodiments of the present invention, but not intended to limit the protection scope of the present invention. Any variations or replacements that can be easily derived by persons skilled in the art without departing from the scope of the present invention shall fall within the protection scope of the present invention. Therefore, the protection scope of the present invention is subject to the appended claims.

## Claims

1. A transmission control protocol TCP data transmission method, comprising:
receiving, by a TCP offload engine, TCP data sent by a remote device;
performing TCP offloading on the TCP data;
identifying the TCP offloaded data, and sending, according to an identification result, the TCP offloaded data to a CPU or a storage device corresponding to storage position information issued by the CPU.

2. The method according to claim 1, wherein, the identifying the TCP offloaded data, and sending, according to the identification result, the TCP offloaded data to the CPU or the storage device corresponding to storage position information issued by the CPU, comprises:
identifying the TCP offloaded data;
sending signaling data or critical data in the TCP offloaded data to the CPU according to the identification result, wherein the critical data is data to be processed by the CPU other than the signaling data and content data;
sending, according to the identification result, the content data in the TCP offloaded data to the storage device corresponding to the storage position information issued by the CPU.

3. A transmission control protocol TCP data transmission method, comprising:
acquiring data indicated by a CPU;
performing TCP encapsulation on the data and sending the encapsulated data to a remote device.

4. The method according to claim 3, wherein:
the acquiring the data indicated by the CPU comprises: receiving storage position information sent by the CPU; reading content data in a storage space specified by the storage position information;
correspondingly, the performing the TCP encapsulation on the data and sending the encapsulated data to the remote device comprises: performing TCP encapsulation on the content data and sending the encapsulated content data to the remote device.

5. The method according to claim 3, wherein the acquiring the data indicated by the CPU comprises: receiving signaling payload data sent by the CPU;
correspondingly, the performing the TCP encapsulation on the data and sending the encapsulated data to the remote device comprises: performing TCP encapsulation on the signaling payload data and sending the encapsulated signaling payload data to the remote device.

6. A transmission control protocol TCP offload engine, comprising a state managing unit, a parsing unit and a sending unit; wherein:
the state managing unit is configured to receive TCP data of a remote device, and perform TCP offloading on the TCP data;
the parsing unit is configured to identify the TCP offloaded data, and send, according to an identification result, the TCP offloaded data to a storage device corresponding to storage position information issued by a CPU, or to the CPU via the state managing unit;
the state managing unit is further configured to acquire data indicated by the CPU and perform TCP encapsulation on the data;
the sending unit is configured to receive the TCP encapsulated data encapsulated by the state managing unit and send the TCP encapsulated data to the remote device.

7. The TCP offload engine according to claim 6, wherein:
the parsing unit is specifically configured to identify the TCP offloaded data, and send, according to the identification result, content data in the TCP offloaded data to the storage device corresponding to the storage position information issued by the CPU or send, according to the identification result, signaling data or critical data in the TCP offloaded data to the CPU via the state managing unit, wherein the critical data is data to be processed by the CPU other than the signaling data and the content data.

8. The TCP offload engine according to claim 6 or 7, wherein:
the state managing unit is specifically configured to receive the storage position information sent by the CPU, and send the storage position information to the sending unit; receive content data sent by the sending unit, perform TCP encapsulation on the content data and send the TCP encapsulated content data to the remote device via the sending unit; the sending unit is specifically configured to receive the storage position information sent by the state managing unit, read content data in a storage space specified by the storage position information and send the content data to the state managing unit.

9. The TCP offload engine according to any one of claims 6 to 8, wherein:
the state managing unit is specifically configured to receive signaling payload data sent by the CPU and perform TCP encapsulation on the signaling payload data;
the sending unit is specifically configured to receive the TCP encapsulated signaling payload data sent by the state managing unit and send the TCP encapsulated signaling payload data to the remote device.

10. A data transmission system, comprising a local device and a remote device, wherein:
the local device comprises a CPU connected through a data bus, the transmission control protocol TCP offload engine according to any one of claims 6 to 9, and a storage device.
